Europäisches Patentamt

**European Patent Office**

Office européen des brevets

(11) Publication number: **0 053 857**

**A1**

(12) # EUROPEAN PATENT APPLICATION

(21) Application number: **81201315.9**

(22) Date of filing: **27.11.81**

(51) Int. Cl.³: **B 65 G 59/10**

(30) Priority: **10.12.80 BE 2058894**

(43) Date of publication of application:
**16.06.82 Bulletin 82/24**

(84) Designated Contracting States:
**AT CH DE FR GB IT LI LU NL SE**

(71) Applicant: **KOEKJESFABRIEK DENEVE**
**personenvennootschap met beperkte aansprakelijkheid**
**Industriepark 9a**
**B-3160 Hulshout(BE)**

(72) Inventor: **Deneve, Marcel F.**
**Industriepark 9a**
**B-3160 Hulshout(BE)**

(74) Representative: **Donné, Eddy**
**M.F.J.Bockstael Arenbergstraat 13**
**B-2000 Anvers(BE)**

(54) Device for freeing containers the one after the other from a pile.

(57) Device for freeing containers the one after the other from a pile characterized in that it mainly consists in the combination of a guide (1) for the piled up containers (2); a stop (3) for the pile; possibly means for continuously pushing the piled up containers against the aforesaid stop; means (11-12) that can both grip and remove the first container (2) of the pile and means (6-9) which during the removal of the first container (2) retain the other containers (2).

Fig.1

Croydon Printing Company Ltd.

EP 0 053 857 A1

1

"Device for freeing containers the one after the other from a pile"

The present invention relates to a device for freeing containers the one after the other from a pile, whereby the word container must be understood as generally as possible and, whatever the material they are made from, all elements are to be taken into consideration that can contain or support something, in other words all elements which are provided for with a partial peripheral edge or peripheral wall, however small the height thereof may be.

It is a known fact that in packing machines and the like one uses more and more supports or containers which, however not exclusively, are made for the major part from plastic material, whereby in the latter case, for various reasons, these supports or containers are generally made as thin as possible.

It is also known that these supports or containers are supplied by their manufacturers as piled up the one in the other so that, before packing, these supports or containers require to be unpiled, in other words require to be fed one by one to the packing machine proper.

Various solutions have already been propounded to uptile suchlike supports or containers, but all these have the drawback that it regularly happens that more than one support or container are being simultaneously freed from the pile in question, so that the further packing process becomes jammed.

Therefore, the present invention relates to a device that absolutely excludes the aforesaid and other drawbacks of the existing devices, providing in this way for a device which is reliable at 100%, is made in a simple way and with which the automatic packing or the like is absolutely not being hampered.

For that purpose, the device mainly consists in the combination of a guide for the container pile; a stop for this pile; means which continuously push the container pile towards and against the aforesaid stop; means which are apt to catch hold of the first container of the pile and remove same and means which, during the removal of the first container, retain the other containers.

In order to throw more light on the characteristics of the invention, a few preferred embodiments are described hereinafter without any limiting character, reference being made to the enclosed drawings, wherein :

Figure 1 shows a schematical side view of a device according to the invention;
Figures 2 and 3 are respectively views according to the lines II-II and III-III of Figure 1;
Figures 4 and 5 are views which are similar to the one of Figure 1, but for two additional characteristic positions of the device;
Figures 6 and 7 are respectively sections according to the lines VI-VI and VII-VII of Figure 5;
Figure 8 is a view which is similar to the one of Figure 4, but for an execution variant; and
Figure 9 is a view according to the one of Figure 3, but also for an execution variant.

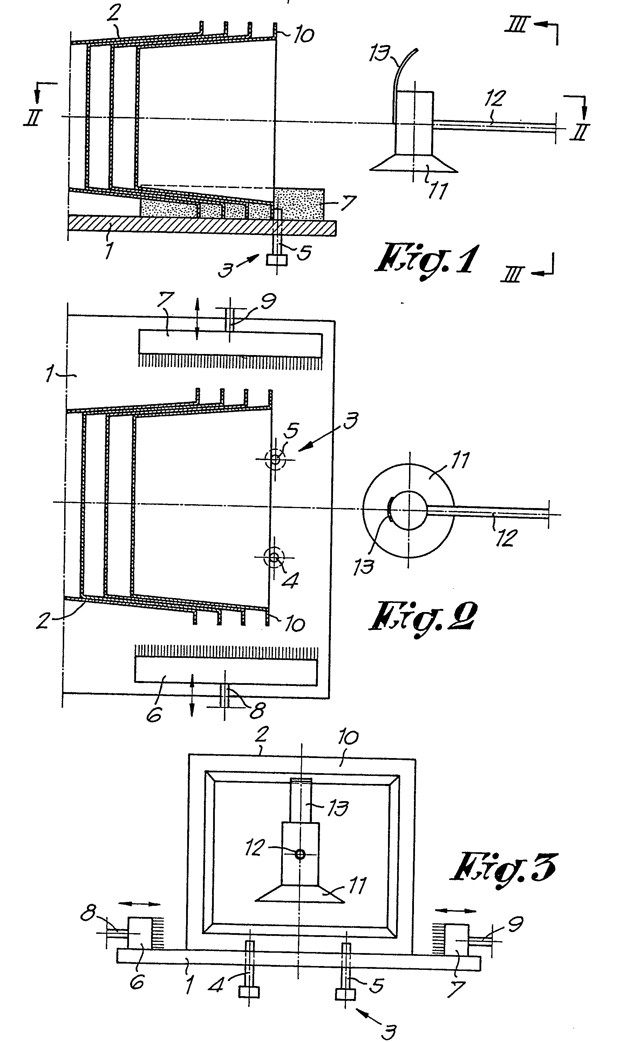

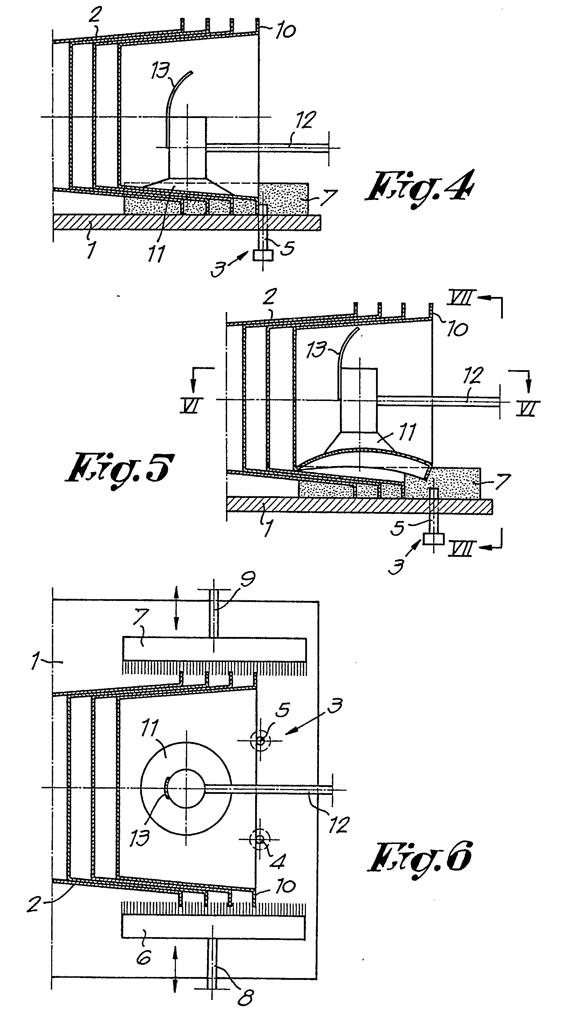

As shown in the Figures 1 through 7, the device according to the invention mainly consists of a guide 1 for a pile of containers 2, whereby this guide shall preferably be arranged so as to be sloping and adjustable.

In the guide 1 there is provided for a stop 3, which shall preferably be adjustable, for the containers 2, this stop, in the present case, being formed by two adjusting screws, 4 and 5 respectively, against which the pile of containers 2 is continuously being slightly pressed under the action of its own weight, of another weight or of a suchlike means, in order to obtain that the first container or suchlike 2 be always positioned at the same place on the guide 1.

On each side of the pile of containers 2 and on the guide 1 there is provided for means that are displaceable in relation to the containers 2 and retain the containers so that a container can be moved only after a certain resistance has been overcome.

In the described embodiment, those means are formed by brushes, 6 and 7 respectively, which are fixed on appropriate not more precisely described means, 8 and 9 respectively, which allow to communicate to the brushes a relative displacement in relation to the containers 2, in order to obtain that these brushes either act on the edges 10 of the containers 2 or completely liberate these containers.

The aforesaid brushes may also be replaced by pistons, rubber parts or the like acting as brushes would.

Finally, the device according to the invention is completed by a suction cup 11, the air exhaust pipe of which is preferably executed as a support 12 for the suction cup, in order to obtain that this support may be fixed in a appropriate way to means not shown allowing to confer to the suction cup 11 a relative motion in relation to the pile of containers 2.

It is clear that the means ensuring the pressure of the pile

4          0053857

of containers 2 against the stop 3; the means operating the brushes 6-7; and the means operating the suction cup 11 may be made up in any shape, but in a preferred embodiment these means shall, for instance, consist of pneumatic or hydraulic power cylinders.

The operation of the device described above is very simple and as follows.

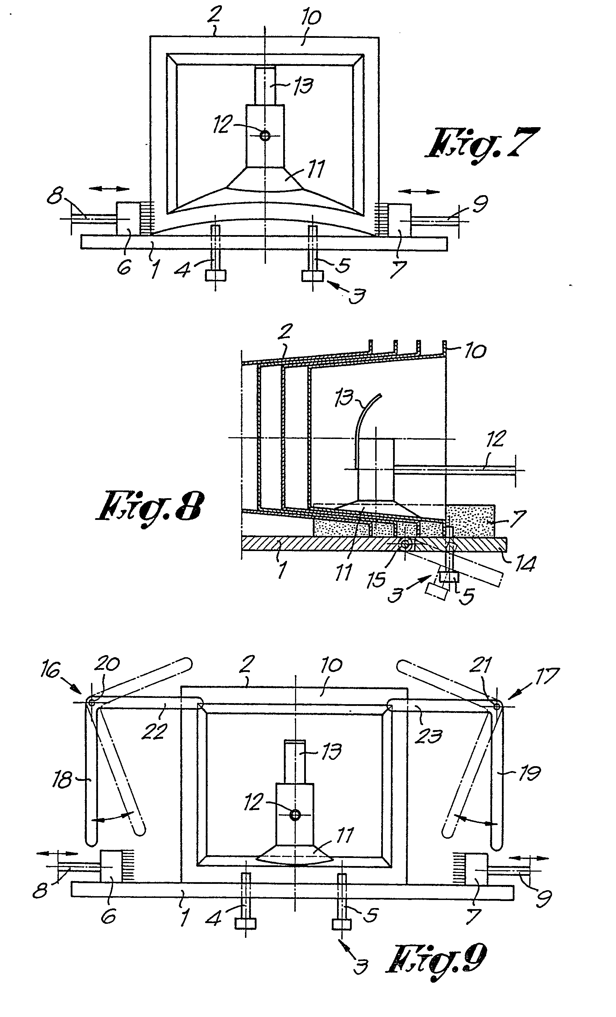

In order to appropriately bring a pile of containers on the guide 1, one will adjust the stop 3 at a certain height and operate the brushes 6 and 7 towards the outside, as shown in the Figures 1 and 2, in order to obtain that the containers may be brought under a slight pressure into contact with the stop 3, after which the brushes 6 and 7 are being placed in the position shown in Figure 6 in order to obtain that the edges 10 of the containers be, so to say, seized by the bristles of the brushes 6 and 7.

At this moment, the suction cup 11 is located in the position shown in Figure 1 and one will bring this in an appropriate way into the first container 2 and then lower same (see Figure 4) until the suction cup 11 rests on a lower part of the first container 2.

At this moment, via the pipe 12, one will apply vacuum to the suction cup, in order to achieve that the lower wall of the first container 2 (see Figure 5) be appropriately sucked in, which is possible because of the very thin walls of the containers, after which the suction cup moves upwards again.

In this way there is obtained that the wall is distorted, on the one hand by the suction and on the other hand through the upward motion of the suction cup 11 so that the lower edge 10 of the container 2 reaches above the top of the stop 3, whereby the removal of the first container 2 can take place in a simple way through moving the suction cup to the outside

5    0053857

into the position shown in Figure 1, after which the suction cup is put out of action again, in order to obtain that the container 2 falls down, for instance, on a not shown conveyor belt which, for this purpose, is provided for under the suction cup 11.

In order to obtain that the container 2 appropriately comes down, on the one hand, and does not remain hung to the suction cup, on the other hand, one has provided the body of this suction cup 11 with an appropriate guide 13, which shall, of course, be adapted to both dimensions and shape of the containers 2.

During the removal of the first container 2, the brushes 6 and 7 will ensure that the following containers be firmly held, so that it is absolutely excluded that, when a first container is being removed, a second will also move.

When the first container is thus removed, one will pull the brushes 6-7 backwards in order to allow the ex-second container to come against the stop 3, etc.

It is clear that in this way one obtains a very simple device for unpiling containers, supports or the like, whilst this device is quite effective and reliable.

In Figure 8 there is shown an embodiment in which the stop 3 is fixed on a front part 14, which can be pivoted away, of the guide 1, and is pivotably fixed by means of a pin 15 in relation to the remaining part of the guide 1, in such a way that, when the first container 2 is being removed from the pile, the stop 3 can be pivoted away. This is important, indeed, in case of comparatively stiff containers 2 which must be unpiled, or in case of containers the unpiling of which may best be achieved by having the suction cup 11 act on the bottom of the container.

6                    0053857

In Figure 9 there is also shown another embodiment in which in combinaition with the stop 3, stops 16 and 17 are provided for in the shape of squares, 18 and 19 respectively, which are pivotable around pivoting points, 20 and 21 respectively, the free ends, 22 and 23 of one of the arms of these levers 18 and 19 being executed in such a way that they can be placed in a certain position in front of the pile of containers 2, which in certain cases, for instance in case of comparatively big containers, may be important. The other ends of these levers 18-19 can possibly be appropriately assembled with the brushes, so that the motion of both levers and brushes are being combined.

It is clear that the device according to the invention can be applied as well for containers with as without edge 10.

The suction cup 11 may also be arranged as sprung or pivoting in relation to the support 12, in order to obtain that this suction cup simply follows the shape of the container.

It goes without saying that the present invention is absolutely not limited to the embodiments described as examples and illustrated in the enclosed drawings, but that such device can be made in a lot of shapes and dimensions of the containers to be piled up, without going outside the scope of the invention;

Claims.

1.- Device for freeing containers the one after the other from a pile, characterized in that it mainly consists in the combination of a guide (1) for the piled up containers (2); a stop (3) for the pile; possibly means for continuously pushing the piled up containers against the aforesaid stop; means (11-12) that can both grip and remove the first container (2) of the pile and means (6-9) which during the removal of the first container (2) retain the other containers (2).

2.- Device according to claim 1, characterized in that the aforesaid stop (3) is formed by one or more adjusting screws (4-5).

3.- Device according to claim 2, characterized in that the aforesaid adjusting screw (or screws) (4-5) are located in a guide part (14) which can be pivoted away.

4.- Device according to claim 1, characterized in that the means (11-12) which are apt to catch the first container (2) from the pile are formed by at least one suction cup (11).

5.- Device according to claim 4, characterized in that the suction cup (11) is sprung mounted on a support (12).

6.- Device according to claim 4, characterized in that the suction cup (11) is pivotally mounted on a support (12).

7.- Device according to one of the preceding claims, characterized in that the support (12) of the suction cup (11) is also the air suction pipe.

8.- Device according to claim 1, characterized in that the means (6-9) which during the removal of the first container (2) retain the other containers (2) are formed by brushes (6-7).

9.- Device according to claim 1, characterized in that the means which continuously push the pile of containers against the aforesaid stop (3) are formed by a weight.

10.- Device according to claim 1, characterized in that the means (6-9) which during the removal of the first container (2) retain the other containers (2) are pistons.

11.- Device according to claim 1, characterized in that the means (6-9) which during the removal of the first container (2) retain the other containers (2) are rubber parts.

12.- Device according to one of the preceding claims, characterized in that additional stops (16-17) are provided for, which are formed by levers (18-19) which can be pivoted away, the motion of which is possibly combined with the means (6-9) which during the removal of the first container (2) retain the other containers (2).

*Fig.1*

*Fig.2*

*Fig.3*

*Fig.4*

*Fig.5*

*Fig.6*

*Fig.7*

*Fig.8*

*Fig.9*

**European Patent Office**

**EUROPEAN SEARCH REPORT**

Application number

EP 81 20 1315

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| X | GB - A - 1 063 666 (S. BRUUN)<br>* Page 2, line 10 to page 3, line 7; figures * | 1,4,7 | B 65 G 59/10 |
| X | US - A - 1 754 463 (G. ERB)<br>* Page 1, line 51 to page 2, line 47; figures * | 1,2,4 | |
| A | FR - A - 2 040 844 (SCAL G.P.)<br>* Page 2, lines 7-36 ; figures * | 3 | TECHNICAL FIELDS SEARCHED (Int.Cl. 3)<br><br>B 65 G<br>B 65 B<br>G 07 F |
| A | US - A - 3 322 301 (G. BLISS)<br>* Column 2, lines 3-10 ; claims 1-3 ; figures * | 1,4,5<br>6,7,1 | |
| A | FR - A - 2 230 553 (FEREMBAL)<br>* Page 3, line 30 to page 4, line 7; figures * | 8 | |
| A | US - A - 3 462 044 (C. McKENNA)<br>* Claim 2 * | 8 | CATEGORY OF CITED DOCUMENTS |
| A | US - A - 1 846 227 (C. STEFFEN)<br>* Page 1, lines 40-64; figures * | 1,9 | X: particularly relevant if taken alone<br>Y: particularly relevant if combined with another document of the same category<br>A: technological background<br>O: non-written disclosure<br>P: intermediate document<br>T: theory or principle underlying the invention<br>E: earlier patent document, but published on, or after the filing date<br>D: document cited in the application<br>L: document cited for other reasons |

./.

The present search report has been drawn up for all claims

&: member of the same patent family, corresponding document

| Place of search | Date of completion of the search | Examiner |
|---|---|---|
| The Hague | 11-03-1982 | VAN ROLLEGHEM |

EPO Form 1503.1 06.78

# 0053857

Application number

**European Patent
Office**

**EUROPEAN SEARCH REPORT**

EP 81 20 1315

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| P,X | NL - A - 79 08330 (W. JENSE) <br> * Page 3, line 35 to page 5, line 4 ; figures * <br><br> -- | 1,2,9, 12 | |
| A | DE - A - 2 238 389 (ESBE - PLASTIC DINKELSBÜHL BRUMMER AG) <br><br> ---- | | |
| | | | TECHNICAL FIELDS SEARCHED (Int. Cl.³) |

EPO Form 1503.2 06.78